(19) Europäisches Patentamt / European Patent Office / Office européen des brevets

(11) **EP 4 687 182 A1**

(12) **EUROPEAN PATENT APPLICATION**

(43) Date of publication:
04.02.2026 Bulletin 2026/06

(21) Application number: 25189785.6

(22) Date of filing: 16.07.2025

(51) International Patent Classification (IPC):
$H01M\ 4/134$ (2010.01)   $H01M\ 4/38$ (2006.01)
$H01M\ 4/62$ (2006.01)   $H01M\ 10/0525$ (2010.01)

(52) Cooperative Patent Classification (CPC):
H01M 4/386; H01M 4/134; H01M 4/62;
H01M 10/0525; H01M 2004/021; H01M 2300/0065

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.07.2024 JP 2024122992

(71) Applicant: TOYOTA JIDOSHA KABUSHIKI
KAISHA
Toyota-shi, Aichi-ken 471-8571 (JP)

(72) Inventors:
• OTAKI, Mitsutoshi
Toyota-shi, Aichi-ken,, 471-8571 (JP)
• VISBALMENDOZA, Heidyhodex
Toyota-shi, Aichi-ken,, 471-8571 (JP)

(74) Representative: **Winter, Brandl - Partnerschaft
mbB
Alois-Steinecker-Straße 22
85354 Freising (DE)**

(54) **ELECTRODE LAYER AND BATTERY**

(57) An electrode layer that an increase in resistance which is due to charging and discharging is small, the electrode layer comprises an electrode active material, a solid electrolyte containing a halogen element, and at least one solvent component, and a product (AB) where (A) is a % by mass of the solvent component in the electrode layer and (B) is a $\delta_P$ value of Hansen Solubility Parameters (HSP) of the solvent component, is less than 3.6832.

FIG. 1

EP 4 687 182 A1

**Description**

TECHNICAL FIELD

The disclosure relates to an electrode layer and a battery.

BACKGROUND

Various studies have been proposed for a battery as disclosed in Patent Document 1.
Patent Document 1: Japanese Patent Application Laid-Open (JP-A) No. 2023-098419
Patent Document 1 discloses an anode mixture containing a Si-based active material, a solid electrolyte and an organic solvent. In an electrode layer containing a solid electrolyte and an organic solvent, the deterioration of the solid electrolyte proceeds when a charging and discharging cycle is repeated. As a result, the resistance of a battery is likely to increase.

SUMMARY

The present disclosure was achieved in light of the above circumstances. An object of the present disclosure is to provide an electrode layer configured so that an increase in resistance which is due to charging and discharging, is small.
The present disclosure includes the following embodiments.

<1> An electrode layer,

wherein the electrode layer comprises an electrode active material, a solid electrolyte containing a halogen element, and at least one solvent component, and
wherein a product (AB) where (A) is a % by mass of the solvent component in the electrode layer and (B) is a $\delta_P$ value of Hansen Solubility Parameters (HSP) of the solvent component, is less than 3.6832.

<2> The electrode layer according to <1>, wherein the electrode active material is a Si-based active material.
<3> The electrode layer according to <2>, wherein the electrode active material has a Si clathrate-type crystal phase.
<4> The electrode layer according to any one of <1> to <3>, wherein a value of the (A) is less than 0.736% by mass.
The electrode layer according to any one of <1> to <4>, wherein the electrode layer comprises, as the solvent component, two or more solvent components having different $\delta_P$ values.
<6> The electrode layer according to any one of <1> to <5>, wherein the solvent component has a C=O bond.
<7> The electrode layer according to any one of <1> to <6>, wherein the electrode layer comprises, as the solvent component, at least any one of tetralin and diisobutyl ketone.
<8> The electrode layer according to any one of <1> to <7>, wherein the solid electrolyte is a sulfide solid electrolyte.
<9> A battery comprising a cathode layer, an electrolyte layer and an anode layer in this order, wherein the anode layer is the electrode layer defined by any one of <1> to <8>.
<10> The battery according to <9>, wherein the electrolyte layer comprises a solid electrolyte.

According to the present disclosure, the effect of obtaining such an electrode layer is exerted, that an increase in resistance which is due to charging and discharging is small.

BRIEF DESCRIPTION OF THE DRAWING

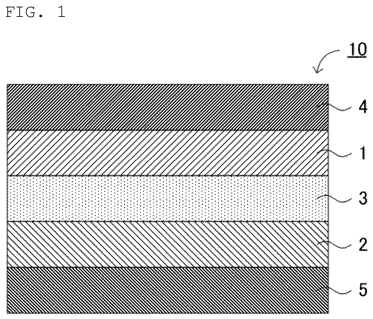

FIG. 1 is a schematic cross-sectional view of the battery of the present disclosure.

SUMMARY

Hereinafter, the embodiments of the present disclosure will be described in detail. Matters that are required to implement the present disclosure (such as common electrode layer structures and production processes not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.
In the present disclosure, unless otherwise noted, the average particle diameter of the particles is the value of a median diameter (D50) which is a particle diameter at an accumulated value of 50% in a volume-based particle size distribution measured by laser diffraction and scattering particle size distribution measurement.

**A.** Electrode layer

According to the present disclosure, there is provided an electrode layer,

wherein the electrode layer comprises an electrode active material, a solid electrolyte containing a halogen element, and at least one solvent component, and
wherein a product (AB) where (A) is a % by mass of the solvent component in the electrode layer and (B) is a $\delta_P$ value of Hansen Solubility Parameters (HSP) of the solvent component, is less than 3.6832.

In the electrode layer containing the solvent component and the solid electrolyte containing a halogen element, when the amount of the residual solvent is large, the halogen element in the solid electrolyte (such as iodine) is gradually eliminated during repeated cycles of charging and discharging. Accordingly, the deterioration of the solid electrolyte proceeds to decrease the ion conductivity of the solid electrolyte. Possible measures include reducing the residual solvent amount and using a solvent that has a small impact on the solid electrolyte even when it remains in the solid electrolyte. The product of the % by mass of the solvent component in the electrode layer and the $\delta_P$ value of Hansen Solubility Parameters (HSP) of the solvent component, was found to be a useful index thereof.

1. Electrode active material

In the present disclosure, the electrode active material is an anode active material when the electrode layer is an anode layer, and the electrode active material is a cathode active material when the electrode layer is a cathode layer.
In the present disclosure, as the anode active material, examples include, but are not limited to, a Si-based active material, a carbon-based active material, an oxide-based active material and a Li-based active material. As the Si-based active material, examples include, but are not limited to, an elemental Si, a Si alloy, a Si oxide and a Si carbide. The Si alloy is an alloy that mainly contains Si. The Si alloy contains a metal other than Si, such as Na, W, Mo, Cr, V, Nb, Fe, Ti, Zr and Hf. The Si alloy may contain only one kind of metal other than Si or may contain two or more kinds of metal other than Si. As the Si oxide, examples include, but are not limited to, SiO. As the Si carbide, examples include, but are not limited to, SiC.
As the carbon-based active material, examples include, but are not limited to, graphite, hard carbon and soft carbon.
As the oxide-based active material, examples include, but are not limited to, lithium titanate.
As the Li-based active material, examples include, but are not limited to, an elemental Li and a Li alloy. The Li alloy contains a metal element other than lithium, such as Mg, Ag, In, Sn, Si, Ga, Au and Pt.
In the present disclosure, as the cathode active material, examples include, but are not limited to, an oxide active material. As the oxide active material, examples include, but are not limited to, a layered rock salt-type active material such as $LiCoO_2$, $LiMnO_2$, $LiNiO_2$, $LiVO_2$ and $LiNi_{1/3}Co_{1/3}Mn_{1/3}O_2$, a spinel-type active material such as $LiMn_2O_4$, $Li_4Ti_5O_{12}$ and $Li(Ni_{0.5}Mn_{1.5})O_4$, and an olivine-type active material such as $LiFePO_4$, $LiMnPO_4$, $LiNiPO_4$ and $LiCoPO_4$.
On the surface of the cathode active material, a coating layer containing a Li ion-conducting compound may be formed. This is because a reaction between the cathode active material and the solid electrolyte (especially the sulfide solid electrolyte) can be suppressed. As the Li ion-conducting compound, examples include, but are not limited to, $B_2O_3$, $Li_2B_4O_7$, $LiBPO_4$, $Li_3PO_4$, $LiPO_3$ and $LiNbO_3$. The thickness of the coating layer is 1 nm or more and 30 nm or less, for example. The coating layer containing the Li ion-conducting compound covers 70% or more of the cathode active material surface, for example. The coating layer may cover 90% or more of the cathode active material surface, or it may cover 100% of the cathode active material surface. The method for covering the cathode active material surface is not particularly limited, and a conventionally-known method may be appropriately employed.
The electrode active material is generally in a particulate form. The electrode active material may be primary particles, or it may be secondary particles (aggregated primary particles). Also, the electrode active material may be porous. That is, the electrode active material may be primary particles having voids in the interior thereof. The percentage of the voids in the primary particles (the void ratio) is 4% or more, for example, and it may be 10% or more. On the other hand, the percentage of the voids is 40% or less, for example, and it may be 20% or less. The void ratio can be obtained by the following steps, for example. First, the electrode layer containing the electrode active material is cross-sectioned by ion milling. Then, a cross section thus obtained is observed with a scanning electron microscope (SEM) to acquire a photograph of the particles. Using an image analysis software, an electrode active material part and a void part in the obtained photograph are distinguished from each other and binarized. The area of the electrode active material part and that of the void part are obtained, and the void ratio (%) is calculated by the following formula.

Void ratio (%) = 100 $\times$ (Area of void part) / ((Area of electrode active material part) + (Area of void part))

The electrode active material may be crystalline, or it may be amorphous.

When the electrode active material is the Si-based active material and is crystalline, the electrode active material generally has a Si crystal phase. An example of the Si crystal phase is a diamond-type crystal phase. In general, Si has a diamond-type crystal phase as the Si crystal phase. As the main phase of the Si crystal phase, the electrode active material may have a diamond-type crystal phase.

Another example of the Si crystal phase is a silicon clathrate-type crystal phase. The silicon clathrate-type crystal phase may be a silicon clathrate I-type crystal phase, or it may be a silicon clathrate II-type crystal phase. In the silicon clathrate-type crystal phase, several Si elements form a polyhedron (a cage) including a pentagon or hexagon. This polyhedron has a space inside for including a metal ion such as a Li ion. By inserting a metal ion into the space, a change in volume which is due to charging and discharging, is suppressed. As the main phase of the Si crystal phase, the Si-based active material may have a silicon clathrate I-type crystal phase, or it may contain a silicon clathrate II-type crystal phase. The silicon clathrate-type crystal phase can be produced by the following method, for example: a Na-Si alloy is produced by reacting Na with Si, and the Na-Si is sintered to remove the Na from the Na-Si alloy, thereby producing the silicon clathrate-type crystal phase.

The average particle diameter (D50) of the electrode active material is not particularly limited. The average particle diameter is 0.01 $\mu$m or more and 50 $\mu$m or less, for example, and it may be 0.5 $\mu$m or more and 30 $\mu$m or less.

The BET specific surface area of the electrode active material is not particularly limited. The BET specific surface area is 30 $m^2/g$ or more, for example, and it may be 40 $m^2/g$ or more, may be 50 $m^2/g$ or more, or may be 60 $m^2/g$ or more. On the other hand, the BET specific surface area of the electrode active material is 150 $m^2/g$ or less, for example.

The electrode active material may be covered with a coating layer containing a solid electrolyte, or the electrode active material may be free of the coating layer. The solid electrolyte for forming the coating layer is not particularly limited. As the solid electrolyte, examples include, but are not limited to, those exemplified below under "2. Solid electrolyte", and the solid electrolyte may be a sulfide solid electrolyte. The coating layer covers 50% or more of the electrode active material, for example. The coating layer may cover 70% or more of the electrode active material, or it may cover 90% or more of the electrode active material. The thickness of the coating layer is 1 nm or more and 100 nm or less, for example. The thickness may be 5 nm or more and 50 nm or less, or it may be 10 nm or more and 30 nm or less.

The percentage of the electrode active material in the electrode layer is 20% by mass or more, for example. It may be 30% by mass or more, or it may be 40% by mass or more. When the percentage of the electrode active material is too small, there is a possibility that a sufficient energy density is not obtained. On the other hand, the percentage of the electrode active material in the electrode layer is 80% by mass or less, for example. It may be 70% by mass or less, or it may be 60% by mass or less. When the percentage of the electrode active material is too large, the ion conductivity and electron conductivity of the electrode layer may relatively decrease.

2. Solid electrolyte

The electrode layer contains a solid electrolyte. By adding the solid electrolyte, the ion conductivity of the electrode layer is increased. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte. Of them, the solid electrolyte may be a sulfide solid electrolyte. This is due to its high ion conductivity. The sulfide solid electrolyte is an electrolyte which contains a S element as the main component of its anion component.

The solid electrolyte contained in the electrode layer may be a solid electrolyte containing a halogen element.

In general, the sulfide solid electrolyte contains at least a Li element and a S element. The sulfide solid electrolyte may further contain a Me element (Me is at least one selected from the group consisting of P, As, Sb, Si, Ge, Sn, B, Al, Ga and In. Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, $xLi_2S \cdot (1-x)P_2S_5$ (where $0.5 \leq x < 1$) and $yLiI \cdot zLiBr \cdot (100-y-z)(xLi_2S \cdot (1-x)P_2S_5)$ (where $0.5 \leq x < 1$, $0 \leq y \leq 30$ and $0 \leq z \leq 30$). In these compositions, x may satisfy $0.7 \leq x \leq 0.8$. Another example of the composition of the sulfide solid electrolyte is $Li_{7-x}PS_{6-x}X_x$ (where X is at least one selected from the group consisting of F, Cl, Br and I, and x satisfies $0 \leq x < 2$). Another example of the composition of the sulfide solid electrolyte is $Li_{4-x}Me_{1-x}P_xS_4$ (where $0 < x < 1$ and Me is at least one selected from the group consisting of Al, Zn, In, Ge, Si, Sn, Sb, Ga and Bi). As the sulfide solid electrolyte, examples include, but are not limited to, $LiI-LiBr-Li_2S-P_2S_5$, $LiI-Li_2S-P_2S_5$, $LiI-Li_2S-P_2O_5$ and $LiI-Li_3PO_4-P_2S_5$.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be $Li_2O-B_2O_3-P_2O_5$, $Li_2O-SiO_2$, $Li_2O-B_2O_3$, $Li_{1.3}Al_{0.3}Ti_{0.7}(PO_4)_3$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, $Li_4SiO_4$, $Li_3PO_4$, $Li_{3+x}PO_{4-x}N_x$ (where $1 \leq x \leq 3$) or the like.

For example, the halide solid electrolyte may be a solid electrolyte containing Li, M and X (M is at least one selected from the group consisting of Ti, Al and Y, and X is F, Cl or Br).

The form of the solid electrolyte may be a particulate form, from the viewpoint of good handleability.

The average particle diameter (D50) of the solid electrolyte particles is not particularly limited. It may be from 1 nm to 100 $\mu$m.

The percentage of the solid electrolyte in the electrode layer is 10% by mass or more, for example. The percentage of the solid electrolyte may be 20% by mass or more, or it may be 30% by mass or more. When the percentage of the solid electrolyte is too small, the electrode layer may have a shortage of ion conducting paths. On the other hand, the percentage of the solid electrolyte in the electrode layer is 60% by mass or less, for example, and it may be 50% by mass or less. When the percentage of the solid electrolyte is too large, the percentage of the electrode active material is relatively small, and a low energy density may be obtained.

### 3. Solvent component

The electrode layer contains at least one solvent component. For example, the solvent component is a residual component of the solvent (dispersion medium) which is used for the production of the electrode layer. The solvent component preferably has low polarity. When the polarity of the solvent component is high, the dispersibility of the solid electrolyte improves. When the solvent component remains in the electrode layer, however, the solid electrolyte may be deteriorated by the residual solvent component. On the other hand, when the polarity of the solvent component is low, a deterioration in the solid electrolyte can be suppressed by the residual solvent component.

The $\delta_p$ (for polarity) of Hansen Solubility Parameters (HSP) of the solvent component is 6.0 $MPa^{0.5}$ or less, for example. The $\delta_p$ of the solvent component may be 4.0 $MPa^{0.5}$ or less, or it may be 3.5 $MPa^{0.5}$ or less. On the other hand, the $\delta_p$ of the solvent component may be 0 $MPa^{0.5}$, or it may be larger than 0 $MPa^{0.5}$.

The $\delta_p$ (for polarity) of the Hansen Solubility Parameters can be obtained based on the following: Hansen Solubility Parameters: A user's handbook, Second Edition. Boca Raton, Fla: CRC Press. (Hansen, Charles (2007)).

The electrode layer may contain, as the solvent component, two or more solvent components having different $\delta_P$ values.

As the solvent component, examples include, but are not limited to, tetralin, diisobutyl ketone, butyl butyrate, mesitylene, heptane, dibutyl ether, decane, dodecane, isodecane and toluene. The solvent component may contain two or more of the components.

From the viewpoint of securing a desired solid electrolyte dispersibility, a C=O bond, which has high polarity, may be contained in the solvent component.

The solvent component may be tetralin, may be diisobutyl ketone, or may be a mixed solvent component of tetralin and diisobutyl ketone.

The percentage of the solvent component in the electrode layer is less than 0.736% by mass. The percentage of the solvent component may be 0.24% by mass or less, or it may be 0.081% by mass or less. When the percentage of the solvent component is too large, the formability of the electrode layer may decrease. The percentage of the solvent component in the electrode layer is more than 0% by mass, and it may be 0.0055% by mass or more. When the percentage of the solvent component is too small, the burden of the step of drying the electrode layer may increase.

The percentage of the solvent component in the electrode layer may be controlled by changing the following conditions: the drying temperature, time and atmosphere of a slurry for electrode layer production. The drying temperature of the slurry may be from 150°C to 250°C. The drying time of the slurry may be from 30 minutes to 3 hours, or it may be from one to two hours. The drying atmosphere of the slurry may be a nitrogen atmosphere, an Ar atmosphere, a vacuum atmosphere or the like.

The percentage of the solvent component in the electrode layer can be measured by TPD-mass (TPD-MS), by a gas chromatography mass spectrometer (GC-MS) or by a liquid chromatography mass spectrometer (LC-MS), for example.

### 4. Electroconductive material

The electrode layer may contain an electroconductive material. The electron conductivity of the electrode layer is increased by adding the electroconductive material. As the electroconductive material, examples include, but are not limited to, a carbonaceous material, metal particles and an electroconductive polymer. As the carbonaceous material, examples include, but are not limited to, a particulate carbonaceous material such as Acetylene Black (AB) and Ketjen Black (KB) and a fibrous carbonaceous material such as vapor-grown carbon fibers (VGCF), carbon nanotubes (CNT) and carbon nanofibers (CNF).

The percentage of the electroconductive material in the electrode layer is 0.1% by mass or more, for example. The percentage of the electroconductive material may be 0.5% by mass or more, or it may be 1.0% by mass or more. When the percentage of the electroconductive material is too small, the electrode layer may have a shortage of ion conducting paths. On the other hand, the percentage of the electroconductive material in the electrode layer is 5% by mass or less, for example, and it may be 3% by mass or less. When the percentage of the electroconductive material is too large, the percentage of the electrode active material is relatively small, and a low energy density may be obtained.

5. Binder

The electrode layer may contain a binder. As the binder, examples include, but are not limited to, styrene-butadiene rubber (SBR), acrylonitrile-butadiene rubber (NBR), butadiene rubber (BR), polyvinylidene fluoride (PVDF), polytetrafluoroethylene (PTFE), a styrene-isoprene-styrene block copolymer (SIS) and an ethylene-propylene-diene copolymer.

The percentage of the binder in the electrode layer may be 0.5% by mass or more, for example. The percentage of the binder may be 1.0% by mass or more, or it may be 1.5% by mass or more. When the percentage of the binder is too small, there is a possibility that an increase in resistance which is due to charging and discharging cannot be sufficiently reduced. On the other hand, the percentage of the binder in the electrode layer is 5% by mass or less, for example, and it may be 3% by mass or less. When the percentage of the binder is too large, the percentage of the electrode active material is relatively small, and a low energy density may be obtained.

In general, the electrode layer of the present disclosure is for use in batteries. The electrode layer may be an anode layer, or it may be a cathode layer. The thickness of the electrode layer is **0.1** $\mu$m or more and 1000 $\mu$m or less, for example. The thickness of the electrode layer may be 1 $\mu$m or more and 500 $\mu$m or less, or it may be 30 $\mu$m or more and 100 $\mu$m or less.

The method for producing the electrode layer is not particularly limited. For example, the production method may be a method including a preparation step (the step of preparing the electrode active material), a mixing step (the step of obtaining an electrode slurry by mixing the electrode active material, the solid electrolyte and a solvent) and an electrode layer forming step (the step of forming the electrode layer by use of the electrode slurry). In the present disclosure, such an electrode layer production method can be provided.

The preparation step is the step of preparing the electrode active material. The electrode active material is the same as the electrode active material described above under "1. Electrode active material". The mixing step is the step of obtaining the electrode slurry by mixing the electrode active material, the solid electrolyte and a solvent. The solvent (dispersion medium) is the same as the solvent component described above. In the present disclosure, the electrode slurry containing the electrode active material, the solid electrolyte and the solvent can be provided.

The electrode layer forming step is the step of forming the electrode layer by use of the electrode slurry. The method for forming the electrode layer is not particularly limited, and a known method can be employed. For example, the electrode layer may be formed by applying the electrode slurry to an electrode current collector and drying the applied slurry. To form the electrode layer, a press treatment (pressing the electrode layer in the thickness direction) may be performed. As the press treatment, examples include, but are not limited to, roller press and plate press.

**B.** Battery

FIG. 1 is a schematic cross-sectional view of the battery of the present disclosure. A battery 10 shown in FIG. 1 includes a cathode layer 1, an anode layer 2, an electrolyte layer 3 disposed between the cathode layer 1 and the anode layer **2, a** positive electrode current collector 4 for collecting electrical current from the cathode layer **1,** and an anode electrode current collector 5 for collecting electrical current from the anode layer **2.** In the present disclosure, the cathode layer 1 or the anode layer 2 is the electrode layer described above under **"A.** Electrode layer".

According to the present disclosure, such a battery is obtained by use of the above-described electrode layer, that an increase in resistance which is due to charging and discharging is small. As described above, the electrode layer may be the anode layer, or it may be the cathode layer. The electrode layer may be the anode layer.

1. Anode layer

The anode layer is a layer which contains at least an anode active material. As needed, the anode layer may contain at least one selected from the group consisting of a solid electrolyte, a solvent component, an electroconductive material and a binder. When the anode layer is the electrode layer of the present disclosure, the anode layer contains at least an anode active material, a solid electrolyte containing a halogen element, and at least one solvent component.

The anode active material, solid electrolyte, solvent component, electroconductive material and binder used in the anode layer are not described here, since they are the same as those described above under **"A. Electrode layer"**.

The mass ratio of the anode active material to the solid electrolyte may be from 85:15 to 30:70, or it may be from 80:20 to 40:60.

**2.** Cathode layer

The cathode layer is a layer which contains at least a cathode active material. As needed, the cathode layer may contain at least one selected from the group consisting of a solid electrolyte, a solvent component, an electroconductive material and a binder. When the cathode layer is the electrode layer of the present disclosure, the cathode layer contains at least a cathode active material, a solid electrolyte containing a halogen element, and at least one solvent component.

The cathode active material, solid electrolyte, solvent component, electroconductive material and binder used in the cathode layer are not described here, since they are the same as those described above under "A. Electrode layer".

The mass ratio of the cathode active material to the solid electrolyte may be from 85:15 to 30:70, or it may be from 80:20 to 50:50.

**3.** Electrolyte layer

The electrolyte layer is a layer formed between the cathode layer and the anode layer, and it contains at least an electrolyte. The electrolyte may be a solid electrolyte, or it may be a liquid electrolyte (an electrolytic solution).

The electrolytic solution may contain a supporting salt and a solvent. As the supporting salt (lithium salt) of the electrolytic solution which has lithium ion conductivity, examples include, but are not limited to, an inorganic lithium salt such as $LiPF_6$, $LiBF_4$, $LiClO_4$ and $LiAsF_6$, and an organic lithium salt such as $LiCF_3SO_3$, $LiN(CF_3SO_2)_2$, $LiN(C_2F_5SO_2)_2$, $LiN(FSO_2)_2$ and $LiC(CF_3SO_2)_3$. As the solvent used in the electrolytic solution, examples include, but are not limited to, a cyclic ester (a cyclic carbonate) such as ethylene carbonate (EC), propylene carbonate (PC) and butylene carbonate (BC), and a chain ester (a chain carbonate) such as dimethyl carbonate (DMC), diethyl carbonate (DEC) and ethyl methyl carbonate (EMC). The electrolytic solution preferably contains two or more kinds of solvents.

The solid electrolyte is not described here since it is the same as the solid electrolyte described above under **"A. Electrode layer"**. The solid electrolyte used in the electrolyte layer may contain a halogen element, or it may be free of a halogen element.

The solid electrolyte may be one kind of solid electrolyte, or it may be 2 or more kinds of solid electrolytes. In the case of using 2 or more kinds of solid electrolytes, they may be mixed together, or they may be formed into layers to obtain a multilayer structure.

The amount of the solid electrolyte in the electrolyte layer is not particularly limited. For example, it may be 50 mass % or more; it may be in a range of from 60 mass % or more to 100 mass % or less; it may be in a range of from 70 mass % or more to 100 mass % or less; or it may be 100 mass **%.** The electrolytic solution contained in the solid electrolyte may be less than 10% by mass with respect to the total amount of the electrolyte. The solid electrolyte may be a composite solid electrolyte containing an inorganic solid electrolyte and a polymer electrolyte.

When the electrolyte layer is a solid electrolyte layer, the solid electrolyte layer contains the solid electrolyte. As needed, it contains a binder and so on.

As the binder, examples include, but are not limited to, a binder that can be incorporated in the above-described electrode layer.

When the solid electrolyte layer contains the binder, the content of the binder may be from 0% by mass to 10% by mass with respect to the total amount of the solid electrolyte layer.

The thickness of the electrolyte layer is 0.1 $\mu$m or more and 1000 $\mu$m or less, for example. The thickness of the electrolyte layer may be 0.1 $\mu$m or more and 500 $\mu$m or less, or it may be 0.1 $\mu$m or more and 100 $\mu$m or less.

4. Other components

In the present disclosure, the battery may include the positive electrode current collector for collecting electrical current from the cathode layer and the anode electrode current collector for collecting electrical current from the anode layer.

As the material for the positive electrode current collector, examples include, but are not limited to, SUS, Cr, Au, Pt, Zn, aluminum, copper, nickel, iron, titanium and carbon. The thickness of the positive electrode current collector is 0.1 $\mu$m or more and 100 $\mu$m or less, for example. The form of the positive electrode current collector may be a foil form, a plat form or the like. The structure of the positive electrode current collector may be such that a buffer layer, an elastic layer or a positive temperature coefficient (PTC) thermistor layer is disposed on the surface.

As the material for the anode electrode current collector, examples include, but are not limited to, SUS, aluminum, copper, nickel, iron, titanium and carbon. As the form of the anode electrode current collector, examples include, but are not limited to, a foil form and a plate form. The plan view shape of the anode electrode current collector is not particularly limited. As the shape, examples include, but are not limited to, a circular shape, an elliptical shape, a rectangular shape and a desired polygonal shape. The thickness of the anode electrode current collector varies depending on the shape. For example, the thickness may be in a range of from 1 $\mu$m to 50 $\mu$m. The structure of the anode electrode current collector may be such that a buffer layer, an elastic layer or a PTC thermistor layer is disposed on the surface.

In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

5. Battery

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid battery or an all-solid-state battery. In the present disclosure, the semi-solid battery is a battery in which the electrolyte layer contains an inorganic solid electrolyte or a liquid component (e.g., an ionic liquid). In the present disclosure, the all-solid-state battery is a battery in which the electrolyte layer contains, as the electrolyte, an inorganic solid electrolyte only. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used in the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

Examples

[Example 1]

(Production of electrode active material)

A Li metal and a Si powder were weighed at a molar ratio of 4:1. In an Ar atmosphere, they were mixed in a mortar at room temperature for 0.5 hours, thereby reacting them. As a result, $Li_4Si$ was obtained. In an Ar atmosphere, the obtained $Li_4Si$ was reacted with ethanol. A reaction product thus obtained was considered to contain Si and $CH_3CH_2OLi$. The reaction product was subjected to filtration, and a solid thus obtained was dried at 120°C for three hours or more, thereby obtaining a powdery porous Si.

A Na-Si alloy was produced as follows by using the obtained porous Si and using NaH as a Na source. The NaH was washed in advance before use. The NaH and the porous Si were weighed at a molar ratio of 1.05:1. They were mixed by a cutter mill. The obtained mixture was heated in a heating furnace at 475°C for 40 hours in an Ar atmosphere, thereby obtaining a powdery Na-Si alloy.

A silicon clathrate was produced as follows by a solid phase method using the obtained Na-Si alloy and using $AlF_3$ as a sodium (Na) scavenger.
The Na-Si alloy and the $AlF_3$ were weighed at a molar ratio of 1:0.35. They were mixed by a cutter mill to obtain a reaction raw material in a powdery form. The obtained reaction raw material was put in a reaction container made of stainless-steel and reacted by heating in a heating furnace at 310°C for 60 hours in an Ar atmosphere, thereby obtaining a precursor active material.

The obtained precursor active material was considered to contain NaF and Al as a by-product. Accordingly, the precursor active material was washed with a mixed solvent of $HNO_3$ and $H_2O$ at a volume ratio of 10:90 for removal of the by-product from the reaction product. After the washing, the washed reaction product was subjected to filtration, and a solid thus obtained was dried at 120°C for three hours or more, thereby obtaining a porous Si clathrate as an electrode active material.

X-ray diffraction (XRD) measurement using CuK$\alpha$ radiation, was carried out on the obtained electrode active material. As a result, the electrode active material was confirmed to have a silicon clathrate II-type crystal phase as the main phase.

(Production of anode)

The following materials were added in a polypropylene container: the obtained electrode active material, a sulfide solid electrolyte (a LiI-Li$_2$S-P$_2$S$_5$-based glass ceramic), an electroconductive material (VGCF), a diisobutyl ketone solution in which 5 % by mass of a binder (a PVDF-based binder) was contained, and diisobutyl ketone as a solvent for anode slurry production. They were stirred for 30 seconds by an ultrasonic disperser (product name: UH-50, manufactured by: SMT Co., Ltd.) Next, the polypropylene container was shaken for 30 minutes by a shaking device (product name: TTM-1, manufactured by: Sibata Scientific Technology Ltd.), thereby obtaining an anode slurry. The obtained anode slurry was applied on an anode current collector (a copper foil manufactured by UACJ) by the blade method using an applicator. In an Ar atmosphere, the applied slurry was dried on a hot plate at 170°C for one hour, thereby obtaining an anode composed of the anode current collector and an anode layer.

(Production of cathode)

The following materials were added in a polypropylene container: a cathode active material (LiNi$_{13}$CO$_{1/3}$Mn$_{13}$O, average particle diameter 6 $\mu$m), a sulfide solid electrolyte (a LiI-Li$_2$S-P$_2$S$_5$-based glass ceramic), an electroconductive material (VGCF), a butyl butyrate solution in which 5% by mass of a PVDF-based binder was contained, and butyl butyrate. They were stirred for 30 seconds by an ultrasonic disperser (product name: UH-50, manufactured by: SMT Co., Ltd.) Next, the polypropylene container was shaken for three minutes by a shaking device (product name: TTM-1, manufactured by: Sibata Scientific Technology Ltd.) The raw materials were further stirred for 30 seconds by the ultrasonic disperser, and the container was further shaken for three minutes by the shaking device, thereby obtaining a cathode slurry. The obtained cathode slurry was applied on a cathode current collector (an aluminum foil manufactured by Showa Denko K. K.) by the blade method using an applicator. In an Ar atmosphere, the applied slurry was dried on a hot plate at 100°C for 30 minutes, thereby obtaining a cathode composed of the cathode current collector and a cathode layer. The area of the cathode layer was adjusted to be smaller than that of the anode layer.

(Production of solid electrolyte layer)

The following materials were added in a polypropylene container: a sulfide solid electrolyte (a LiI-Li$_2$S-P$_2$S$_5$-based glass ceramic), a heptane solution in which 5% by mass of a BR- based binder was contained, and heptane. They were stirred for 30 seconds by an ultrasonic disperser (product name: UH-50, manufactured by: SMT Co., Ltd.) Next, the polypropylene container was shaken for 30 minutes by a shaking device (product name: TTM-1, manufactured by: Sibata Scientific Technology Ltd.), thereby obtaining a slurry. The obtained slurry was applied on a peelable sheet (an Al foil) by the blade method using an applicator. The applied slurry was dried on a hot plate at 100°C for 30 minutes, thereby obtaining a transfer member composed of the peelable sheet and a solid electrolyte layer.

(Production of all-solid-state battery)

A solid electrolyte layer for attachment was disposed on the cathode layer of the cathode. They were put in a roll press machine and pressed at 100 kN/cm and 165°C. Accordingly, the first laminate was obtained. Next, the anode was put in the roll press machine and pressed at 60 kN/cm and 25°C. Then, the anode, the solid electrolyte layer for attachment, and the transfer member were disposed so that the anode electrode current collector of the anode, the anode layer thereof, the solid electrolyte layer for attachment, the solid electrolyte layer of the transfer member, and the peelable sheet thereof were arranged in this order. Note that the solid electrolyte layer for attachment and the solid electrolyte layer of the transfer member were disposed to face each other. A laminate thus obtained was put in a flat uniaxial press machine and pre-pressed at 100 MPa and 25°C for 10 seconds. Then, the peelable sheet was peeled off from the solid electrolyte layer. Accordingly, the second laminate was obtained. The first laminate and the second laminate were disposed so that the solid electrolyte layer for attachment of the first laminate and the solid electrolyte layer of the second laminate faced each other. They were put in the flat uniaxial press machine and pressed at 200 MPa and 120°C for one minute. Accordingly, an all-solid-state battery was obtained. The produced all-solid-state battery was fixed by a fixing jig at a predetermined fixing pressure.

[Comparative Example 1]

An all-solid-state battery was obtained in the same manner as Example 1, except for the following: as the electrode active material (the anode active material), a porous Si having a diamond-type crystal phase was used; in the production of the anode, a diisobutyl ketone solution containing 5% by mass of a binder (a PVDF-based bonder) was used; as the solvent for anode slurry production, tetralin was used instead of diisobutyl ketone; and the anode slurry applied onto the anode electrode current collector was dried on a hot plate at 150°C for one hour in an Ar atmosphere.

[Example 2]

An all-solid-state battery was obtained in the same manner as Example 1, except for the following: in the production of the anode, the anode slurry applied onto the anode electrode current collector was dried on a hot plate at 170°C for one hour in an Ar atmosphere, and then it was further dried on a hot plate at 200°C for one hour in an Ar atmosphere.

[Example 3]

An all-solid-state battery was obtained in the same manner as Example 1, except for the following: in the production of the anode, the anode slurry applied onto the anode electrode current collector was dried on a hot plate at 170°C for one hour in an Ar atmosphere, and then it was further dried on the hot plate at 200°C in a vacuum environment.

[Example 4]

An all-solid-state battery was obtained in the same manner as Example 1, except for the following: in the production of the anode, a diisobutyl ketone containing 5% by mass of a binder (a PVDF-based binder) was used, and as the solvent for anode slurry production, tetralin was used instead of diisobutyl ketone.

[Example 5]

An all-solid-state battery was obtained in the same manner as Example 1, except for the following: in the production of the anode, a diisobutyl ketone solution containing 5% by mass of a binder (a PVDF-based binder) was used; as the solvent for anode slurry production, tetralin was used instead of diisobutyl ketone; and the anode slurry applied onto the anode electrode current collector was dried on a hot plate at 170°C for one hour in an Ar atmosphere, and then it was further dried on a hot plate at 200°C for one hour in an Ar atmosphere.

[Example 6]

An all-solid-state battery was obtained in the same manner as Example 1, except for the following: in the production of the anode, a diisobutyl ketone solution containing 5% by mass of a binder (a PVDF-binder) was used; as the solvent for anode slurry production, tetralin was used instead of diisobutyl ketone, and the anode slurry applied onto the anode electrode current collector was dried on a hot plate at 170°C for one hour in an Ar atmosphere, and then it was further dried on a hot plate at 200°C for one hour in a vacuum environment.

[Example 7]

An all-solid-state battery was obtained in the same manner as Example 1, except for the following: as the electrode active material (the anode active material), a porous Si having a diamond-type crystal phase was used; in the production of the anode, a tetralin solution containing 5% by mass of a binder (a PVDF-based binder) was used; as the solvent for anode slurry production, tetralin was used instead of diisobutyl ketone; and the anode slurry applied onto the anode electrode current collector was dried on a hot plate at 170°C for one hour in an Ar atmosphere, and then it was further dried on a hot plate at 200°C for one hour in a vacuum environment.

(Measurement of residual solvent amount)

The residual solvent amount of the anode layer obtained in each of Examples 1 to 7 and Comparative Example 1 was measured.

The residual solvent amount was measured as follows, using 7250 GC/Q-TOF (manufactured by Agilent): after the production of the anode, the powdered anode layer was dissolved in and extracted from ethanol, and the amount of the solvent remaining in the extracted anode layer was measured and regarded as the residual solvent amount. The temperature of the anode layer was increased to 500°C at 1°C/min, and the amount of the titrated anode layer was 1 uL. The result is shown in Table 1.

The product (AB) of (A) the residual solvent amount of each solvent component and (B) the $\delta_p$ value thereof was calculated, and the sum of the products (AB) of the solvent components was calculated. The result is shown in Table 1.

(Measurement of resistance increase amount)

A charge and discharge test was carried out on the each of the all-solid-state batteries obtained in Examples 1 to 7 and Comparative Example 1. More specifically, first, CCCV charging of each all-solid-state battery was carried out at 0.1 C to 4.15 V. Then, the all-solid-state battery was discharged at 1 C to 2.5 V.

Next, CCCV charging of the all-solid-state battery was carried out at 1/3 C to 4.15; the all-solid-state battery was discharged at 1/3 C for 5 seconds; and using the value of a resulting voltage drop, the initial resistance of the all-solid-state battery was obtained by the DCIR method. CCCV discharging of the all-solid-state battery was carried out at 1/3 C to 2.5 V.

Then, the charging and discharging cycle of the all-solid-state battery, in which CCCV charging of the all-solid-state battery was carried out at 1/3 C to 4.15 V, and CCCV discharging thereof was carried out at 1/3 C to 2.5 V, was repeated 5 times. Then, in the same manner as above, the resistance of the all-solid-state battery after the charging and discharging was obtained. The difference between the resistance of the all-solid-state battery after the charging and discharging and the initial resistance of the all-solid-state battery was obtained and regarded as the resistance increase amount. The result is shown in Table 1. The resistance increase amount shown in Table 1 is a relative value when the result of Comparative Example 1 is regarded as 100.

Table 1

| | Diisobutyl ketone | | | Tetralin | | | | |
|---|---|---|---|---|---|---|---|---|
| | $\delta_P$ | Residual solvent amount | Product of residual solvent amount and $\delta_P$ (Residual solvent amount $\times$ $\delta_P$) | $\delta_P$ | Residual solvent amount | Product of residual solvent amount and $\delta_P$ (Residual solvent amount $\times$ $\delta_P$) | Sum of products | Resistance increase amount (Relative value) |
| | MPa$^{0.5}$ | % by mass | | MPa$^{0.5}$ | % by mass | | | |
| Comparative Example 1 | 5.4 | 0.68 | 3.672 | 0.2 | 0.056 | 0.0112 | 3.6832 | 100 |
| Example 1 | 5.4 | 0.24 | 1.296 | 0.2 | 0 | 0 | 1.296 | 89 |
| Example 2 | 5.4 | 0.081 | 0.4374 | 0.2 | 0 | 0 | 0.4374 | 74 |
| Example 3 | 5.4 | 0.0069 | 0.03726 | 0.2 | 0 | 0 | 0.03726 | 65 |
| Example 4 | 5.4 | 0.0025 | 0.0135 | 0.2 | 0.003 | 0.0006 | 0.0141 | 57 |
| Example 5 | 5.4 | 0.0148 | 0.07992 | 0.2 | 0.02 | 0.004 | 0.08392 | 67 |
| Example 6 | 5.4 | 0.0003 | 0.00162 | 0.2 | 0.01 | 0.002 | 0.00362 | 55 |
| Example 7 | 5.4 | 0 | 0 | 0.2 | 0.0029 | 0.00058 | 0.00058 | 59 |

As shown in Table 1, it was revealed that the sum of the products (AB) of (A) the residual solvent amount and (B) the $\delta_p$ value was small in Examples 1 to 7 compared to Comparative Example 1. Especially, the resistance increase amounts of Examples 4 and 6 were approximately half compared to Comparative Example 1. The reason is presumed as follows: by using high-polar diisobutyl ketone in combination with low-polar tetralin, the anode layer secured desired dispersibility and increased its ion conductivity due to the high-polar diisobutyl ketone; meanwhile, a deterioration in solid electrolyte was suppressed due to the low-polar tetralin.

Reference Signs List

1. Cathode layer
2. Anode layer
3. Electrolyte layer
4. Cathode current collector
5. Anode current collector
10. battery

**Claims**

1.  An electrode layer,

    wherein the electrode layer comprises an electrode active material, a solid electrolyte containing a halogen element, and at least one solvent component, and
    wherein a product (AB) where (A) is a % by mass of the solvent component in the electrode layer and (B) is a $\delta_P$ value of Hansen Solubility Parameters (HSP) of the solvent component, is less than 3.6832.

2.  The electrode layer according to Claim 1, wherein the electrode active material is a Si-based active material.

3.  The electrode layer according to Claim 2, wherein the electrode active material has a Si clathrate-type crystal phase.

4.  The electrode layer according to any one of Claims 1 to 3, wherein a value of the (A) is less than 0.736% by mass.

5.  The electrode layer according to any one of Claims 1 to 4, wherein the electrode layer comprises, as the solvent component, two or more solvent components having different $\delta_P$ values.

6.  The electrode layer according to any one of Claims 1 to 5, wherein the solvent component has a C=O bond.

7.  The electrode layer according to any one of Claims 1 to 6, wherein the electrode layer comprises, as the solvent component, at least any one of tetralin and diisobutyl ketone.

8.  The electrode layer according to any one of Claims 1 to 7, wherein the solid electrolyte is a sulfide solid electrolyte.

9.  A battery comprising a cathode layer, an electrolyte layer and an anode layer in this order,
    wherein the anode layer is the electrode layer defined by any one of Claims 1 to 8.

10. The battery according to Claim 9, wherein the electrolyte layer comprises a solid electrolyte.

FIG. 1

Europäisches
Patentamt

European
Patent Office

Office européen
des brevets

## EUROPEAN SEARCH REPORT

**Application Number**

EP 25 18 9785

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/231136 A1 (MITSUI AKIO [JP] ET AL) 20 July 2023 (2023-07-20) * paragraph [0031]; examples 2, 3 * | 1-10 | INV. H01M4/134 H01M4/38 H01M4/62 H01M10/0525 |
| X | EP 4 349 786 A1 (PANASONIC IP MAN CO LTD [JP]) 10 April 2024 (2024-04-10) * paragraphs [0120], [0149], [0150]; example 3 * | 1,4,7-10 | |
| A | US 2022/328801 A1 (HAGIWARA HIDEKI [JP]) 13 October 2022 (2022-10-13) * table 3 * | 1-10 | |

**TECHNICAL FIELDS SEARCHED (IPC)**

H01M

The present search report has been drawn up for all claims

| Place of search | Date of completion of the search | Examiner |
|---|---|---|
| Munich | 12 December 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9785

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2025

| Patent document cited in search report | | Publication date | Patent family member(s) | | Publication date |
|---|---|---|---|---|---|
| US 2023231136 | A1 | 20-07-2023 | CN | 116404093 A | 07-07-2023 |
| | | | DE | 102022135021 A1 | 06-07-2023 |
| | | | JP | 7644034 B2 | 11-03-2025 |
| | | | JP | 2023100077 A | 18-07-2023 |
| | | | KR | 20230106091 A | 12-07-2023 |
| | | | US | 2023231136 A1 | 20-07-2023 |
| EP 4349786 | A1 | 10-04-2024 | CN | 117321793 A | 29-12-2023 |
| | | | EP | 4349786 A1 | 10-04-2024 |
| | | | JP | WO2022249796 A1 | 01-12-2022 |
| | | | US | 2024204168 A1 | 20-06-2024 |
| | | | WO | 2022249796 A1 | 01-12-2022 |
| US 2022328801 | A1 | 13-10-2022 | CN | 115207452 A | 18-10-2022 |
| | | | JP | 7435531 B2 | 21-02-2024 |
| | | | JP | 2022162645 A | 25-10-2022 |
| | | | KR | 20220141749 A | 20-10-2022 |
| | | | US | 2022328801 A1 | 13-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2023098419 A

**Non-patent literature cited in the description**

• **HANSEN, CHARLES**. Hansen Solubility Parameters: A user's handbook. CRC Press, 2007